(19) Europäisches Patentamt
European Patent Office
Office européen des brevets

(11) EP 4 708 084 A1

(12) EUROPEAN PATENT APPLICATION
published in accordance with Art. 153(4) EPC

(43) Date of publication:
11.03.2026 Bulletin 2026/11

(51) International Patent Classification (IPC):
G06F 18/27 (2023.01)    G09C 1/00 (2006.01)

(21) Application number: 24800028.3

(22) Date of filing: 04.03.2024

(52) Cooperative Patent Classification (CPC):
G06F 18/27; G09C 1/00

(86) International application number:
PCT/JP2024/008142

(87) International publication number:
WO 2024/228297 (07.11.2024 Gazette 2024/45)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 01.05.2023 JP 2023075877

(71) Applicant: NTT DOCOMO BUSINESS, Inc.
Tokyo 100-8019 (JP)

(72) Inventors:
• TANAKA, Satoshi
  Tokyo 100-8019 (JP)
• SAKURAI, Yoichi
  Tokyo 100-8019 (JP)
• SAWADA, Masashi
  Tokyo 100-8019 (JP)

(74) Representative: Hoffmann Eitle
Patent- und Rechtsanwälte PartmbB
Arabellastraße 30
81925 München (DE)

(54) ANALYSIS DEVICE, ANALYSIS METHOD, AND ANALYSIS PROGRAM

(57) An analysis device according to the embodiment includes a creation unit and an output control unit. The creation unit arranges a line segment indicating a point that is a product of an attribute value of a regression model obtained by regression analysis by secure computation and a regression coefficient in a direction corresponding to a sign of the corresponding regression coefficient and creates a nomogram in which the point is plotted at a position corresponding to a target point on the line segment. The output control unit outputs the created nomogram.

FIG.5

## EP 4 708 084 A1

**Description**

Field

The present invention relates to an analysis device, an analysis method, and an analysis program. Background

In the related art, a secure computation system that performs statistical calculation while keeping data secret and provides a user with a statistic obtained as a result of the calculation is known. For example, the secure computation system may be used for analysis of data in a medical field or the like that handles important personal information.

In addition, a secure computation system that performs statistical processing on data in an encrypted state is known. For example, a technique for obtaining a parameter of logistic regression analysis using the data in an encrypted state is known (See, for example, Patent Literature 2).

In addition, a method of expressing a predictive value of regression analysis by a nomogram is known (See, for example, Non Patent Literature 2). In addition, "rms" that is packaged software including a function for creating a nomogram is known (See, for example, Non Patent Literature 3).

Citation List

Patent Literature

Patent Literature 1: WO 2019/124260 A
Patent Literature 2: JP 2020-042128 A

Non Patent Literature

Non Patent Literature 1: NTT Corp., System of Secure Computation and Principles thereof, [online], [searched on January 6, 2023], Internet <URL:https://www.rd.ntt/sil/project/sc/secure_computation.h tml>
Non Patent Literature 2: Social Survey Research Information Co., Ltd., Statistical Glossary Nomogram, [online], [searched on January 6, 2023], Internet <URL:https://bellcurve.jp/statistics/glossary/5644.html>
Non Patent Literature 3: Package 'rms' February 9, 2023, [online], [searched on March 27, 2023], Internet <https://cran.r-project.org/web/packages/rms/rms.pdf#Rfn.nomogram.1> Summary

Technical Problem

However, a nomogram in the related art has a problem that a value of each term of the regression formula may not be intuitively and clearly expressed.

Each term of the regression formula of logistic regression is represented by a value obtained by multiplying a value of an attribute by a regression coefficient. In addition, the regression coefficient can take both positive and negative values. Therefore, the value of each term of the regression formula can take both positive and negative values.

As described in Non Patent Literature 2, in the nomogram in the related art, when the regression coefficient becomes negative, the magnitude relationship of the memory is reversed. Therefore, it is not intuitively clear whether the regression coefficient is negative or positive. In particular, if a sign is not written, it is unclear whether the regression coefficient is negative. Solution to Problem

Advantageous Effects of Invention

According to the present invention, it is possible to obtain a nomogram in which the value of each term of the regression formula is intuitively and clearly expressed.

Brief Description of Drawings

FIG. 1 is a diagram illustrating a configuration example of an analysis system according to an embodiment.
FIG. 2 is a diagram illustrating a configuration example of an analysis device according to the embodiment.

FIG. 3 is a diagram illustrating an example of learning data.
FIG. 4 is a diagram illustrating definitions of symbols.
FIG. 5 is a diagram illustrating an example of a nomogram.
FIG. 6 is a flowchart illustrating a flow of processing of the analysis device according to the embodiment.
FIG. 7 is a diagram illustrating an example of the nomogram.
FIG. 8 is a diagram illustrating an example of a computer that executes an analysis program.

Description of Embodiments

Hereinafter, embodiments of an analysis device, an analysis method, and an analysis program according to the present application are described in detail with reference to the drawings. Note that the present invention is not limited to the embodiments described below.

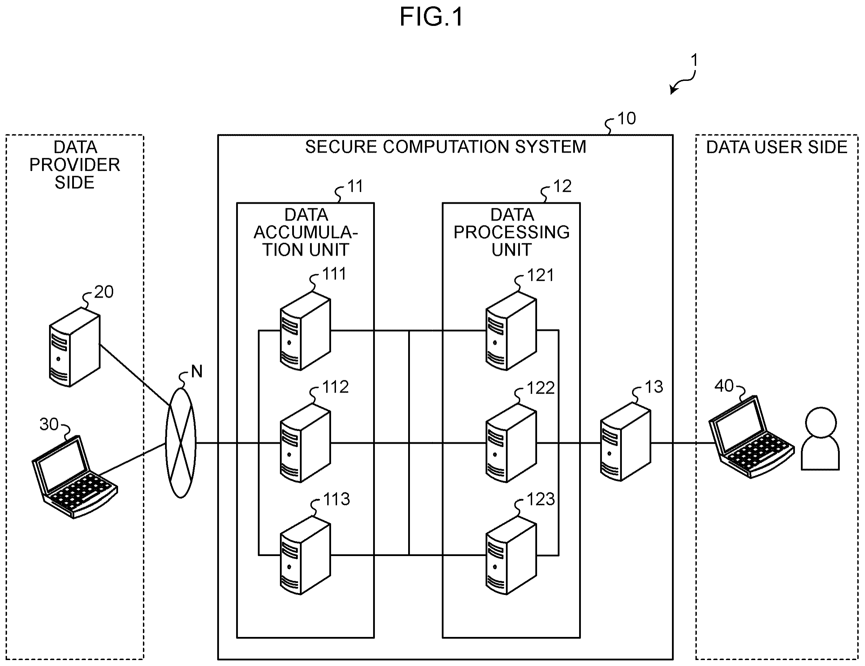

First, a configuration of an analysis system is described with reference to FIG. 1. The analysis system is a system for analyzing data using secure computation.

As illustrated in FIG. 1, an analysis system 1 includes a secure computation system 10. Furthermore, the secure computation system 10 is connected to a providing device 20 and a providing device 30 via a network N. For example, the network N is the Internet. In addition, the secure computation system 10 is connected to a terminal device 40.

The providing device 20 and the providing device 30 are devices on the data provider side. The providing device 20 and the providing device 30 provide (register) data to the secure computation system 10.

The data provided by the providing device 20 and the providing device 30 includes information (for example, personal information such as a name and an address of an individual) which is desirably concealed. For example, the providing device 20 and the providing device 30 provide medical care data or health examination data used in a medical institution. However, the data provided by the providing device 20 and the providing device 30 is not limited to data used in a medical institution.

The secure computation system 10 includes a data accumulation unit 11 and a data processing unit 12. The data accumulation unit 11 includes a plurality of accumulation devices (an accumulation device 111, an accumulation device 112, and an accumulation device 113) that accumulate data by secret sharing. In addition, the data processing unit 12 includes a plurality of calculation devices (a calculation device 121, a calculation device 122, and a calculation device 123) that process data by secure computation. Note that the number of accumulation devices and the number of calculation devices are not limited to the example illustrated in FIG. 1.

The secure computation system 10 can perform secret sharing and secure computation according to the method described in Non-Patent Literature 1 (posted URL: https://www.rd.ntt/sil/project/sc/secure_computation.html).

First, the data provided to the secure computation system 10 is divided (fragmented) into a plurality of shares. Then, the plurality of shares are distributed into and accumulated in a plurality of accumulation devices included in the data accumulation unit 11. In the example of FIG. 1, the provided data is divided into three shares. Then, the accumulation device 111, the accumulation device 112, and the accumulation device 113 accumulate shares one by one.

The data processing unit 12 performs secure computation on the share accumulated in the data accumulation unit 11. The data processing unit 12 executes secure computation by multi-party computation using a plurality of calculation devices. In the example of FIG. 1, the data processing unit 12 executes secure computation by the calculation device 121, the calculation device 122, and the calculation device 123.

The data processing unit 12 can perform various statistical operations without restoring the share. For example, the data processing unit 12 can perform an operation of a table such as sorting and combining, aggregation of the number of records, calculation of statistics such as a total sum, an average, a maximum value, a minimum value, and a sample variance, and a statistical test such as t-test. Furthermore, the data processing unit 12 can perform statistical analysis such as regression analysis and principal component analysis.

An analysis device 13 analyzes data using the data processing unit 12. The analysis device 13 provides an analysis result to the terminal device 40 on the data user side based on the result of the secure computation executed by the data processing unit 12. The user can obtain an analysis result of data via the terminal device 40.

For example, the secure computation system 10 may be provided with data related to attributes and bodies for each individual. The data related to the attribute and the body is personal information that is desirably concealed. The data related to the attributes and the bodies includes, for example, ages, genders, heights, weights, and the like. The data accumulation unit 11 stores a share obtained by fragmenting the provided data in each accumulation device.

Note that each divided share is data that is singly meaningless. Therefore, the original data cannot be restored from one share. Meanwhile, it is possible to restore the original data by gathering a plurality of shares.

The user of the data cannot view the registered data itself but can view the analysis result of the data via the analysis device 13 and the terminal device 40. For example, when the data includes the gender and the weight of an individual, the user cannot view the gender and the weight of each individual but can view the "average weight of men" that is an analysis result of the data.

As an example, the data accumulation unit 11 can perform secret sharing by using a technique referred to as Shamir's threshold secret sharing method. At this time, the data accumulation unit 11 stores, as shares, three coordinates passing through a polynomial having the original data as an intercept in each server. In addition, since the inclination of the polynomial is randomly determined, even if the original data is the same, the share is not necessarily the same every time. The original data may be a numerical value or data converted into a numerical value.

The secure computation system 10 can restore the original data from a plurality of shares. If the polynomial is a linear expression, the secure computation system 10 can obtain the intercept (corresponding to the original data) from the intersection of a straight line connecting the two coordinates (corresponding to the share) and an axis. Meanwhile, since a straight line is not determined from one coordinate, the original data cannot be restored.

In addition, as described above, the data processing unit 12 can perform secure computation on the original data without restoring the share. For example, the result of adding the shares represented by the coordinates corresponds to the share of the result of adding the original data of each share.

The analysis device 13 causes the data processing unit 12 to execute processing by secure computation in response to a request from the terminal device 40. Note that the data processing unit 12 or the terminal device 40 may embody a function equivalent to that of the analysis device 13. For example, the analysis system 1 may be a configuration not including the analysis device 13. In that case, the terminal device 40 is connected to the data processing unit 12 and executes processing equivalent to that of the analysis device 13. Furthermore, the statistical operation based on the share may be executed by the terminal device 40 instead of the data processing unit 12.

In the first embodiment, an example in which the analysis device 13 performs logistic regression analysis by secure computation is described. In addition, the analysis device 13 creates a nomogram based on a regression formula obtained by logistic regression analysis.

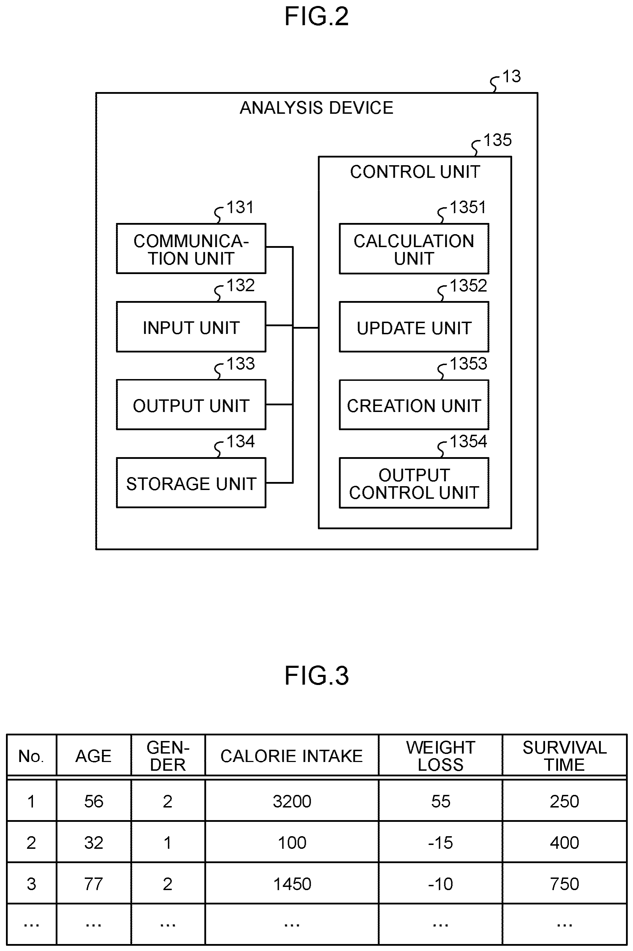

A configuration of the analysis device 13 is described with reference to FIG. 2. FIG. 2 is a diagram illustrating a configuration example of the analysis device according to the embodiment.

Each unit of the analysis device 13 is described. As illustrated in FIG. 2, the analysis device 13 includes a communication unit 131, an input unit 132, an output unit 133, a storage unit 134, and a control unit 135.

The communication unit 131 performs data communication between other devices. For example, the communication unit 131 is a network interface card (NIC). The communication unit 131 can transmit and receive data to and from other devices.

The input unit 132 is an interface for receiving input of data. The input unit 132 is connected, for example, to an input device such as a mouse and a keyboard.

The output unit 133 is an interface for outputting data. The output unit 133 is connected, for example, to an output device such as a display and a speaker.

The storage unit 134 is a storage device such as a hard disk drive (HDD), a solid state drive (SSD), or an optical disk. Note that the storage unit 134 may be a semiconductor memory capable of rewriting data, such as a random access memory (RAM), a flash memory, or a non volatile static random access memory (NVSRAM). The storage unit 134 stores an operating system (OS) and various programs executed by the analysis device 13.

The control unit 135 controls the entire analysis device 13. The control unit 135 is, for example, an electronic circuit such as a central processing unit (CPU), a micro processing unit (MPU), or a graphics processing unit (GPU), or an integrated circuit such as an application specific integrated circuit (ASIC) or a field programmable gate array (FPGA). In addition, the control unit 135 includes an internal memory for storing programs and control data defining various processing procedures and executes each process using the internal memory.

The control unit 135 functions as various processing units by various programs operating. For example, the control unit 135 includes a calculation unit 1351, an update unit 1352, a creation unit 1353, and an output control unit 1354.

The calculation unit 1351 performs calculation of logistic regression by secure computation. The calculation unit 1351 inputs an explanatory variable to a logistic regression model and outputs an objective variable.

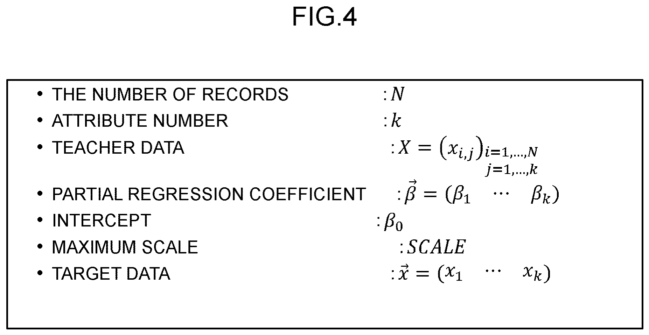

FIG. 4 illustrates definitions of symbols used in the following description. FIG. 4 is a diagram illustrating definitions of the symbols.

As illustrated in FIG. 4, N is the number of records. k is the number of attributes (explanatory variables). Teacher data X includes attribute information of each record of the $N \times k$ matrix. For example, the i-th record is $(x_1,..., x_k)$.

The result is information indicating survival or death of a certain record. t represents observation time. y is a binary value of 0 (survival) or 1 (death). For example, the result for each observation time is expressed as $(t_1 y_1)... (t_N y_N)$.

A partial regression coefficient, an intercept, and a maximum scale are used in the calculation described below. The maximum scale is a constant (for example, 100).

The target data is data used for prediction and is not included in the teacher data.

A structure of the logistic regression model is expressed in Formula (1). The left side of Formula (1) is an objective variable.

$$p = \frac{1}{1 + \exp\left(-\beta_0 - \sum_{j=1}^{k} \beta_j x_j\right)} \qquad \cdots (1)$$

By applying a logit function to both sides of Formula (1), an exponential part (inside parentheses after exp) takes the form of a polynomial.

An intercept $\beta_0$ and a partial regression coefficient $\beta_j$ of the polynomial are parameters of the logistic regression model. In addition, $x_j$ is a value (attribute value) of an attribute of the logistic regression model and corresponds to an explanatory variable. That is, the polynomial includes an intercept term and a product term of the partial regression coefficient and the attribute value.

Note that the number of attributes expressed by Formula (1) is an example. The number of attributes may be one or more.

The update unit 1352 updates a parameter of the logistic regression model by secure computation so that the objective variable calculated by the calculation unit 1351 approaches a correct value.

The logistic regression model is learned by performing the processing of the calculation unit 1351 and the update unit 1352 once or a plurality of times.

FIG. 3 is a diagram illustrating an example of learning data. Values in an "age" column, a "sex" column, a "calorie intake" column, and a "weight loss" column in FIG. 3 are explanatory variables of the logistic regression model. Further, a predicted probability based on a value in a "survival time" column is an objective variable of the logistic regression model.

The calculation unit 1351 inputs the values in the "age" column, the "gender" column, the "calorie intake" column, and the "weight loss" column to the logistic regression model and obtains an output. The update unit 1352 updates the parameter of the logistic regression model so that the output obtained by the calculation unit 1351 approaches the predicted probability based on the value of the "survival time" column.

The creation unit 1353 creates a nomogram for calculating a predicted value (objective variable) of the logistic regression model. Here, it is assumed that the parameter of the logistic regression model has been updated by the update unit 1352.

The creation unit 1353 acquires the updated partial regression coefficient $\beta$. In addition, an explanatory variable x of a target for which a nomogram is to be created (target data in FIG. 4) is acquired. Here, the objective variable corresponding to the explanatory variable acquired by the creation unit 1353 may be unknown.

Here, it is assumed that the explanatory variables (attribute values) are four ($k = 4$) of $x_1, x_2, x_3,$ and $x_4$. $x_1, x_2, x_3,$ and $x_4$ are values of attributes "age", "gender", "calorie intake", "weight loss", respectively, and correspond to the values in the column with the same name in FIG. 3. The partial regression coefficients corresponding to the attribute values $x_1, x_2, x_3,$ and $x_4$ are $w_1, w_2, w_3,$ and $w_4$, respectively.

The attribute values $x_1, x_2, x_3,$ and $x_4$ are set to 45, 1, 270, and 21, respectively. In some cases, $x_1, x_2, x_3,$ and $x_4$ are referred to as x without distinction. Among the partial regression coefficients $w_1, w_2, w_3,$ and $w_4$, $w_1$ and $w_2$ are positive, and $w_3$ and $w_4$ are negative.

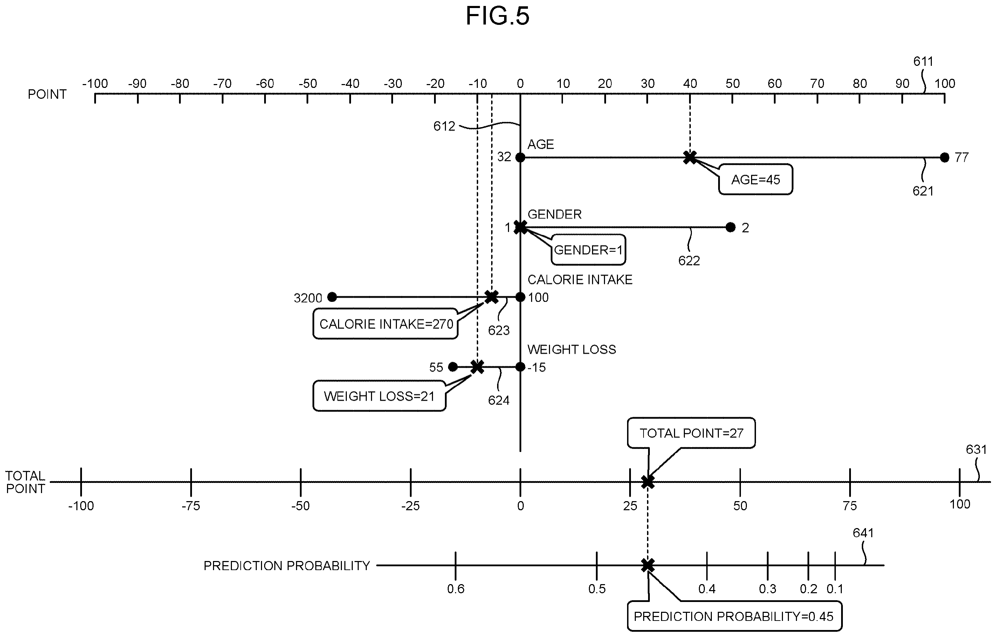

A procedure in which the creation unit 1353 creates the nomogram illustrated in FIG. 5 is described. FIG. 5 is a diagram illustrating an example of the nomogram.

First, the creation unit 1353 calculates a maximum value $x_j^+$ of the attribute for each attribute as the maximum value of secure computation. Also, the creation unit 1353 calculates a minimum value $x_j^-$ of the attribute for each attribute as the minimum value of secure computation. Here, j is a number for distinguishing the attribute ($j = 1, 2, 3, 4$).

Next, for each attribute, the creation unit 1353 calculates $z_j^+$ and $z_j^-$ that are products of the attribute value and the partial regression coefficient, by Formula (2) or Formula (3). The creation unit 1353 performs calculation by Formula (2) when the partial regression coefficient is positive, and performs calculation by Formula (3) when the partial regression coefficient is negative.

$$z_j^+ = \beta_j x_j^+, z_j^- = \beta_j x_j^- \qquad \cdots (2)$$

$$z_j^+ = \beta_j x_j^-, z_j^- = \beta_j x_j^+ \qquad \cdots (3)$$

Subsequently, the creation unit 1353 calculates a width $d_j$ of the attribute for each attribute by Formula (4). The creation unit 1353 may calculate the width of the attribute not by secure computation but by normal subtraction.

$$d_j = z_j^+ - z_j^- \qquad \cdots (4)$$

Further, the creation unit 1353 calculates a maximum width D by Formula (5). Here, the attribute "age" takes the maximum width D.

$$D = \max_{j}\left(d_j\right) \quad \cdots (5)$$

In addition, the creation unit 1353 calculates a scale S of points by Formula (6). For example, SCALE is 100.

$$S = \frac{SCALE}{D} \quad \cdots (6)$$

Here, the creation unit 1353 calculates a point $s_j$ of each attribute by Formula (7).

$$s_j = S\left(\beta_j x_j - z_j^{-}\right) \quad \cdots (7)$$

Then, the creation unit 1353 calculates a total point POINT by Formula (8).

$$POINT = \sum_{j=1}^{k} s_j \quad \cdots (8)$$

In addition, the creation unit 1353 calculates a predicted probability p from the total point POINT by Formula (9).

$$p = \frac{1}{1 + exp\left(-\beta_0 - \frac{POINT}{S} - \sum_{j=1}^{k} z_j^{-}\right)} \quad \cdots (9)$$

The creation unit 1353 plots a scale of the total point on an axis 631. Then, the creation unit 1353 inversely converts the point from the probability, calculates a scale of the predicted probability, and plots the scale on an axis 641. An intersection of a straight line that is perpendicular to the axis 631 and passes through the scale of the total point and the axis 641 corresponds to the predicted probability.

A method of drawing a nomogram is described. As illustrated in FIG. 5, first, the creation unit 1353 arranges an axis 611 of points. The range of the points indicated by the axis 611 is from -100 to 100. Note that the axis is a line segment.

Then, the creation unit 1353 arranges an axis 612 that is perpendicular to the axis 611 and is in contact with the position where the point of the axis 611 is 0.

Here, the creation unit 1353 arranges a line segment that is a line segment corresponding to each attribute and is parallel to the axis 611 (perpendicular to the axis 612). A line segment 621, a line segment 622, a line segment 623, and a line segment 624 correspond to the attributes "age", "gender", "calorie intake", and "weight loss", respectively.

The creation unit 1353 arranges an end point of a line segment to be in contact with the axis 612. Then, when the regression coefficient of the corresponding attribute is positive, the creation unit 1353 arranges the line segment so as to extend in the positive direction of the axis 611 (right direction in FIG. 5) from the contact point with the axis 611. In contrast, when the regression coefficient of the corresponding attribute is negative, the creation unit 1353 arranges the line segment so as to extend in the negative direction of the axis 611 (left direction in FIG. 5) from the contact point with the axis 611. Further, the position of the scale (cross mark) is determined by a value obtained by multiplying the regression coefficient and the attribute value.

In other words, a line segment corresponding to each attribute is a line segment parallel to the axis 611 and is a line segment that passes through a point obtained by plotting a value obtained by multiplying the regression coefficient and the attribute value on the axis 611 and is in contact with a perpendicular line perpendicular to the axis 611 and the axis 612. Whether the position where the scale is plotted is on the positive side or the negative side of the axis 611 is determined by the sign of the regression coefficient and the sign of the attribute value.

In this manner, the creation unit 1353 arranges the line segment indicating the point that is the product of the attribute value of the regression model obtained by the regression analysis by the secure computation and the regression coefficient in the direction corresponding to the sign of the corresponding regression coefficient and creates the nomogram in which the point (corresponding to the scale) is plotted at the position corresponding to the target point on the line segment.

Specifically, the creation unit 1353 arranges a line segment having a positive sign of the corresponding regression coefficient among the line segments so as to extend in the first direction with an axis perpendicular to the line segment as a start point, and arranges a line segment having a negative sign of the corresponding regression coefficient so as to extend in a direction opposite to the first direction with an axis perpendicular to the line segment as a start point. The first direction is a positive direction of the axis 611 in FIG. 5.

The output control unit 1354 outputs the nomogram created by the creation unit 1353. That is, the output control unit 1354 causes a display device such as a display to display the nomogram illustrated in FIG. 5 via the output unit 133.

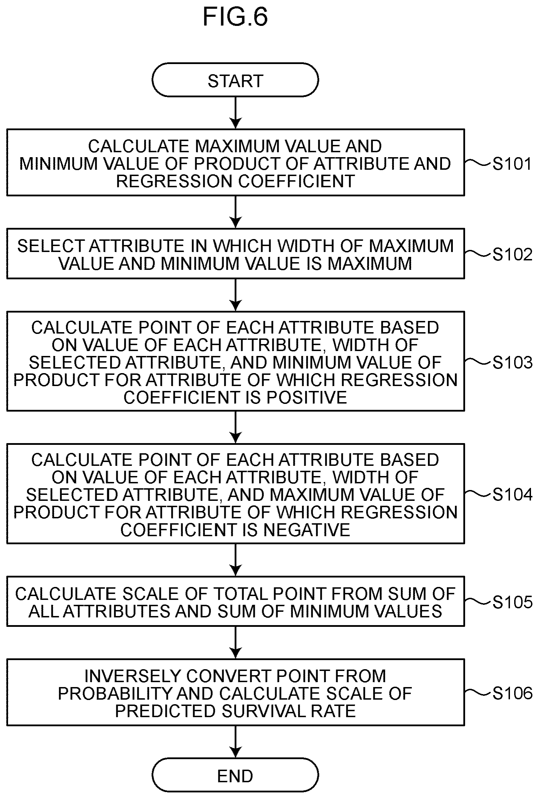

FIG. 6 is a flowchart illustrating a flow of processing of the analysis device according to the embodiment. The analysis device 13 acquires a regression coefficient as a result of the regression analysis performed by the secure computation system 10. In addition, it is assumed that a value (explanatory variable) of an attribute of which the objective variable is unknown is given.

First, the analysis device 13 calculates the maximum value and the minimum value of the product of the attribute and the regression coefficient (Step S101). Here, the analysis device 13 selects the attribute having the maximum width between the maximum value and the minimum value (Step S102).

Next, for the attribute of which the regression coefficient is positive, the analysis device 13 calculates the point of each attribute based on the value of each attribute, the width of the selected attribute, and the minimum value of the product (Step S103).

Also, for the attribute of which the regression coefficient is negative, the analysis device 13 calculates the point of each attribute based on the value of each attribute, the width of the selected attribute, and the maximum value of the product (Step S104).

Subsequently, the analysis device 13 calculates a scale of the total point from the sum of all attributes and the sum of the minimum values (Step S105). Further, the analysis device 13 inversely converts the point from the probability to calculate a scale of the predicted probability (Step S106).

[Effects of Embodiment]

As described above, the analysis device 13 includes the creation unit 1353 and the output control unit 1354. The creation unit 1353 arranges the line segment indicating the point that is the product of the attribute value of the regression model obtained by the regression analysis by the secure computation and the regression coefficient in the direction corresponding to the sign of the corresponding regression coefficient and creates the nomogram in which the point is plotted at the position corresponding to the target point on the line segment. The output control unit 1354 outputs the nomogram.

Also, the creation unit 1353 arranges a line segment having a positive sign of the corresponding regression coefficient among the line segments so as to extend in the first direction with an axis perpendicular to the line segment as a start point, and arranges a line segment having a negative sign of the corresponding regression coefficient so as to extend in a direction opposite to the first direction with an axis perpendicular to the line segment as a start point.

As a result, since the extending direction of the line segment changes according to the sign of the regression coefficient, the value of each term of the regression formula is intuitively and clearly expressed.

[Modification]

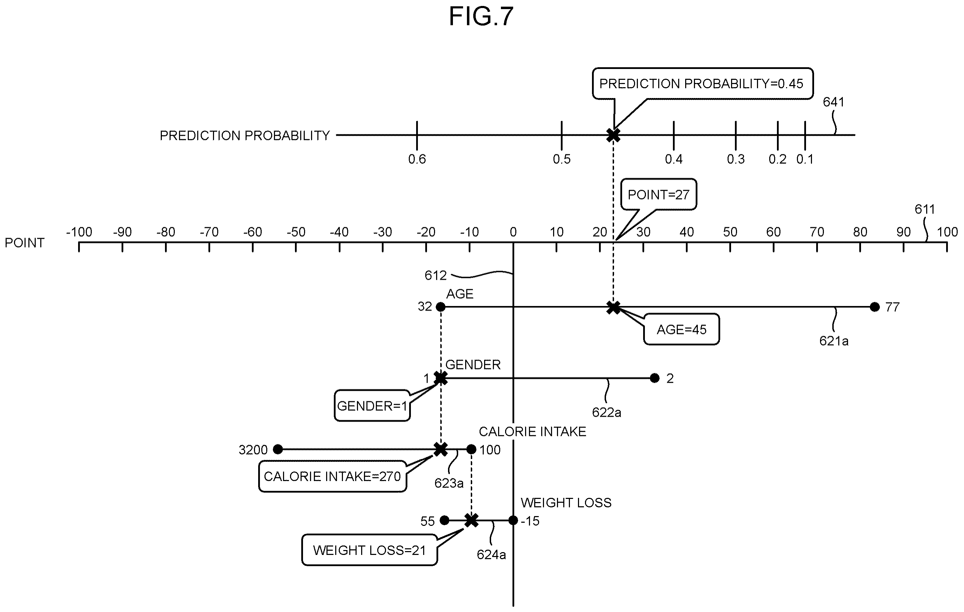

The creation unit 1353 may create a nomogram as illustrated in FIG. 7. FIG. 7 is a diagram illustrating an example of the nomogram. In the nomogram of FIG. 7, the position of the end point of the line segment of each attribute is different from that in the nomogram of FIG. 5.

An end point on the axis 612 side of the line segment corresponding to each attribute is referred to as a start point, and an end point opposite to the axis 612 is referred to as an end point. First, the creation unit 1353 arranges a line segment 624a corresponding to the attribute "weight loss" in the same manner as in FIG. 5. At this time, the start point of the line segment 624a is in contact with the axis 612. In addition, the creation unit 1353 plots the scale (cross mark) of the attribute "weight loss" in the same manner as in FIG. 5.

Next, the creation unit 1353 aligns the start point of a line segment 623a corresponding to the attribute "calorie intake" with the position of the scale of the attribute "weight loss". Specifically, the start point of the line segment 623a is arranged on a straight line that passes through the scale of the attribute "weight loss" and is perpendicular to the axis 612. Then, similarly to FIG. 5, the arranged line segments extend in a direction corresponding to the sign of the regression coefficient.

In this manner, the creation unit 1353 arranges the start point of the line segment corresponding to the first attribute value (for example, the value of the attribute "weight loss") among the line segments in accordance with the position of the point plotted on the line segment corresponding to the second attribute value (for example, the value of the attribute "calorie intake"). In addition, similarly to the line segment 623a, the creation unit 1353 performs the arrangement of line segments 622a and 621a and the plotting of the scale.

In the nomogram of FIG. 7, the point at the position where the scale of the attribute "age" arranged last is plotted represents the total point. An intersection of a straight line that is perpendicular to the line segment 621a and passes through the scale of the total point and the axis 641 corresponds to the predicted probability. As described above, according to the nomogram of FIG. 7, the total point can be easily intuitively grasped.

[System Configuration and the Like]

In addition, each component of each illustrated device is functionally conceptual and does not necessarily need to be physically configured as illustrated. That is, a specific form of distribution and integration of each device is not limited to the illustrated form and can be configured by functionally or physically distributing or integrating all or a part thereof in any unit according to various loads, usage conditions, and the like. Furthermore, all or any part of each processing function performed in each device can be embodied by a central processing unit (CPU) and a program analyzed and executed by the CPU or can be embodied as hardware by wired logic. Note that the program may be executed not only by the CPU but also by another processor such as a GPU.

In addition, among the processes described in the present embodiment, all or some of the processes described as being automatically performed can be manually performed, or all or some of the processes described as being manually performed can be automatically performed by a known method. In addition, the processing procedure, the control procedure, the specific name, and the information including various pieces of data and various parameters illustrated in the document and the drawings can be arbitrarily changed unless otherwise specified.

[Program]

As an embodiment, the analysis device 13 can be implemented by installing an analysis program for executing the above analysis processing as package software or online software in a desired computer. For example, by causing the information processing apparatus to execute the above analysis program, the information processing apparatus can be caused to function as the analysis device 13. The information processing apparatus described here includes a desktop or notebook personal computer. In addition, the information processing apparatus includes mobile communication terminals such as a smartphone, a mobile phone, and a personal handyphone system (PHS), and a slate terminal such as a personal digital assistant (PDA) and the like are included in the category thereof.

Furthermore, the analysis device 13 can also be implemented as an analysis server device that uses, as a client, a terminal device used by the user and provides the client with a service related to the analysis processing. For example, the analysis server device is implemented as a server device that provides an analysis service in which the regression coefficient and the attribute value are input and an image of the nomogram is output.

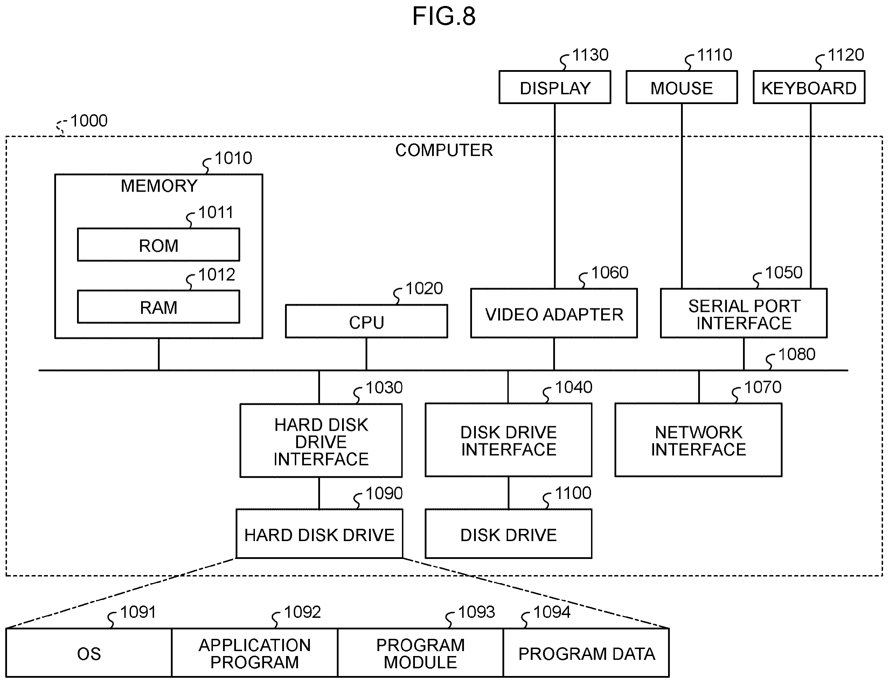

FIG. 8 is a diagram illustrating an example of a computer that executes the analysis program. A computer 1000 includes, for example, a memory 1010 and a CPU 1020. Also, the computer 1000 also includes a hard disk drive interface 1030, a disk drive interface 1040, a serial port interface 1050, a video adapter 1060, and a network interface 1070. These units are connected by a bus 1080.

The memory 1010 includes a read only memory (ROM) 1011 and a random access memory (RAM) 1012. The ROM 1011 stores, for example, a boot program such as a basic input output system (BIOS). The hard disk drive interface 1030 is connected to a hard disk drive 1090. The disk drive interface 1040 is connected to a disk drive 1100. For example, a removable storage medium such as a magnetic disk or an optical disk is inserted into the disk drive 1100. The serial port interface 1050 is connected to, for example, a mouse 1110 and a keyboard 1120. The video adapter 1060 is connected to, for example, a display 1130.

The hard disk drive 1090 stores, for example, an OS 1091, an application program 1092, a program module 1093, and program data 1094. That is, the program that defines each processing of the analysis device 13 is implemented as the program module 1093 in which a code executable by a computer is described. The program module 1093 is stored in, for example, the hard disk drive 1090. For example, the program module 1093 for executing processing similar to the functional configuration in the analysis device 13 is stored in the hard disk drive 1090. Note that the hard disk drive 1090 may be replaced with a solid state drive (SSD).

In addition, the setting data used in the processing of the embodiment described above is stored, for example, in the memory 1010 or the hard disk drive 1090 as the program data 1094. Then, the CPU 1020 reads the program module 1093 and the program data 1094 stored in the memory 1010 and the hard disk drive 1090 to the RAM 1012 as necessary and executes the processing of the embodiment described above.

Note that the program module 1093 and the program data 1094 are not limited to a case of being stored in the hard disk drive 1090 and may be stored in, for example, a detachable storage medium and read by the CPU 1020 via the disk drive 1100 or the like. Alternatively, the program module 1093 and the program data 1094 may be stored in another computer connected via a network (local area network (LAN), wide area network (WAN), and the like). Then, the program module 1093 and the program data 1094 may be read by the CPU 1020 from another computer via the network interface 1070.

Reference Signs List

| 1 | ANALYSIS SYSTEM |
| 10 | SECURE COMPUTATION SYSTEM |
| 11 | DATA ACCUMULATION UNIT |
| 12 | DATA PROCESSING UNIT |
| 13 | ANALYSIS DEVICE |
| 131 | COMMUNICATION UNIT |
| 132 | INPUT UNIT |
| 133 | OUTPUT UNIT |
| 134 | STORAGE UNIT |
| 135 | CONTROL UNIT |
| 1351 | CALCULATION UNIT |
| 1352 | UPDATE UNIT |
| 1353 | CREATION UNIT |
| 1354 | OUTPUT CONTROL UNIT |

**Claims**

1. An analysis device comprising:

    a creation unit that arranges a line segment indicating a point that is a product of an attribute value of a regression model obtained by regression analysis by secure computation and a regression coefficient in a direction corresponding to a sign of the corresponding regression coefficient and creates a nomogram in which the point is plotted at a position corresponding to a target point on the line segment; and
    an output control unit that outputs the nomogram.

2. The analysis device according to claim 1, wherein the creation unit arranges a line segment having a positive sign of the corresponding regression coefficient among the line segments so as to extend in a first direction with an axis perpendicular to the line segment as a start point, and arranges a line segment having a negative sign of the corresponding regression coefficient so as to extend in a direction opposite to the first direction with an axis perpendicular to the line segment as a start point.

3. The analysis device according to claim 1, wherein the creation unit arranges a start point of a line segment corresponding to a first attribute value among the line segments in accordance with a position of a point plotted on a line segment corresponding to a second attribute value.

4. An analysis method performed by an analysis device, the method comprising:

    a creation step of arranging a line segment indicating a point that is a product of an attribute value of a regression model obtained by regression analysis by secure computation and a regression coefficient in a direction corresponding to a sign of the corresponding regression coefficient and creating a nomogram in which a point is plotted at a position corresponding to a target point on the line segment; and
    an output control step of outputting the nomogram.

5. An analysis program causing a computer to perform processing of:

    a creation step of arranging a line segment indicating a point that is a product of an attribute value of a regression model obtained by regression analysis by secure computation and a regression coefficient in a direction corresponding to a sign of the corresponding regression coefficient and creating a nomogram in which the point is plotted at a position corresponding to a target point on the line segment; and
    an output control step of outputting the nomogram.

# FIG.1

EP 4 708 084 A1

# FIG.2

# FIG.3

| No. | AGE | GEN-DER | CALORIE INTAKE | WEIGHT LOSS | SURVIVAL TIME |
|---|---|---|---|---|---|
| 1 | 56 | 2 | 3200 | 55 | 250 |
| 2 | 32 | 1 | 100 | -15 | 400 |
| 3 | 77 | 2 | 1450 | -10 | 750 |
| ... | ... | ... | ... | ... | ... |

# FIG.4

- THE NUMBER OF RECORDS $\quad\quad : N$
- ATTRIBUTE NUMBER $\quad\quad : k$
- TEACHER DATA $\quad\quad : X = \left(x_{i,j}\right)_{\substack{i=1,\ldots,N \\ j=1,\ldots,k}}$
- PARTIAL REGRESSION COEFFICIENT $\quad : \vec{\beta} = (\beta_1 \quad \cdots \quad \beta_k)$
- INTERCEPT $\quad\quad : \beta_0$
- MAXIMUM SCALE $\quad\quad : SCALE$
- TARGET DATA $\quad\quad : \vec{x} = (x_1 \quad \cdots \quad x_k)$

FIG.5

# FIG.6

START

↓

CALCULATE MAXIMUM VALUE AND
MINIMUM VALUE OF PRODUCT OF ATTRIBUTE AND
REGRESSION COEFFICIENT — S101

↓

SELECT ATTRIBUTE IN WHICH WIDTH OF MAXIMUM
VALUE AND MINIMUM VALUE IS MAXIMUM — S102

↓

CALCULATE POINT OF EACH ATTRIBUTE BASED
ON VALUE OF EACH ATTRIBUTE, WIDTH OF
SELECTED ATTRIBUTE, AND MINIMUM VALUE OF
PRODUCT FOR ATTRIBUTE OF WHICH REGRESSION
COEFFICIENT IS POSITIVE — S103

↓

CALCULATE POINT OF EACH ATTRIBUTE BASED
ON VALUE OF EACH ATTRIBUTE, WIDTH OF
SELECTED ATTRIBUTE, AND MAXIMUM VALUE OF
PRODUCT FOR ATTRIBUTE OF WHICH REGRESSION
COEFFICIENT IS NEGATIVE — S104

↓

CALCULATE SCALE OF TOTAL POINT FROM SUM OF
ALL ATTRIBUTES AND SUM OF MINIMUM VALUES — S105

↓

INVERSELY CONVERT POINT FROM
PROBABILITY AND CALCULATE SCALE OF
PREDICTED SURVIVAL RATE — S106

↓

END

# FIG.7

EP 4 708 084 A1

# FIG.8

## INTERNATIONAL SEARCH REPORT

| International application No. |
| --- |
| **PCT/JP2024/008142** |

| A. | CLASSIFICATION OF SUBJECT MATTER |
| --- | --- |

*G06F 18/27*(2023.01)i; *G09C 1/00*(2006.01)i
FI:   G06F18/27; G09C1/00 650Z

According to International Patent Classification (IPC) or to both national classification and IPC

| B. | FIELDS SEARCHED |
| --- | --- |

Minimum documentation searched (classification system followed by classification symbols)

G06F18/00-18/40; G09C1/00; G06Q10/04

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | WO 2020/075436 A1 (NEC CORPORATION) 16 April 2020 (2020-04-16) paragraphs [0016]-[0060], fig. 4-5 | 1-5 |
| Y | がん治療成績の把握、患者の治療説明での活用を目的としたがん累積再発曲線を描画する簡易ノモグラムツールの開発, 公益財団法人がん研究会　有明病院　報道発表資料 [online]. 22 December 2022, [retrieved on 22 April 2024], Internet: <URL: https://www.jfcr.or.jp/up_pdf/20221221084731_1.pdf>, (Development of a Simple Nomogram Tool to Draw a Cumulative Cancer Recurrence Curve for Use in Understanding Cancer Treatment Outcomes and Explaining Treatment to Patients), non-official translation (Press release of the Cancer Institute Hospital Of JFCR) sections 2-3 | 1-5 |

☐ Further documents are listed in the continuation of Box C.  ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **22 April 2024** | **14 May 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
### Information on patent family members

| International application No. |
| --- |
| **PCT/JP2024/008142** |

| Patent document cited in search report | Publication date (day/month/year) | Patent family member(s) | Publication date (day/month/year) |
| --- | --- | --- | --- |
| WO 2020/075436 A1 | 16 April 2020 | US 2021/0374775 A1<br>paragraphs [0023]-[0069], fig. 4-5 | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019124260 A

- JP 2020042128 A

**Non-patent literature cited in the description**

- System of Secure Computation and Principles thereof. NTT Corp., 06 January 2023

- Statistical Glossary Nomogram. Social Survey Research Information Co., 06 January 2023